# EUROPÄISCHE PATENTSCHRIFT

(11) **EP 1 293 321 B1**
(45) Veröffentlichungstag und Bekanntmachung des Hinweises auf die Patenterteilung: **12.11.2003**
(21) Anmeldenummer: 02017195.5
(22) Anmeldetag: 31.07.2002
(51) Int. Cl.: B29C 45/16, B29C 45/40

(54) **Werkzeug zum Mehrkomponenten-Spritzgiessen, insbesondere zum 2-Komponenten-Spritzgiessen von Kunststoff-Spritzteilen**
Mould for multi-component injection moulding, in particular for two-colour injection moulding of plastic parts
Moule pour mouler par injection à plusieurs composants, en particulier pour mouler par injection à deux composants des objets en matière plastique

(30) Priorität: 17.09.2001 DE 10145730
(43) Veröffentlichungstag der Anmeldung: 19.03.2003
(73) Patentinhaber: Braun Formenbau GmbH, 79353 Bahlingen (DE)
(72) Erfinder: Herb, Eckard, 79346 Endingen (DE)
(74) Vertreter: Goy, Wolfgang, Dipl.-Phys.

(56) Entgegenhaltungen:
- WO-A-98/47686
- DE-A- 2 132 089
- GB-A- 1 325 614

## Beschreibung

Die Erfindung betrifft ein Werkzeug zum Mehrkomponenten-Spritzgießen, insbesondere zum 2-Komponenten-Spritzgießen von Kunststoff-Spritzteilen nach dem Oberbegriff des Anspruchs 1.

Zum Spritzen von aus mehreren Kunststoff-Komponenten bestehenden Spritzteilen muß das zunächst gespritzte Vorspritzteil in einen weiteren Formenhohlraum übergeführt werden, wo eine weitere Komponente gespritzt werden soll. Um das Vorspritzteil der ersten Komponente in den Formenhohlraum für die zweite Komponente umzusetzen, gibt es sogenannte Wendewerkzeuge, wie sie beispielsweise aus der DE-A-21 32 089 bekannt sind. Darunter ist zu verstehen, daß sich in der einen Werkzeughälfte ein sogenanntes Wendeteil einer Umsetzeinrichtung befindet, welches nach dem Spritzen der ersten Komponente um 180° zum Spritzen der zweiten Komponente gedreht wird, wobei dieses Wendeteil das Vorspritzteil während der Drehbewegung hält. Bei dem Wendewerkzeug aus der vorgenannten DE-A-21 32 089 werden dann die Fertigspritzteile mittels einer Auswerferplatte sowie axialen Ausstoßerstiften aus dem Werkzeug ausgestoßen.

Um die Spritzlinge bei Wendewerkzeugen auf der Umsetzeinrichtung zu halten, weist sie bei bestimmten, aus der Praxis bekannten Ausführungsformen quer zur Achse der Umsetzeinrichtung sich erstreckende Formkeme auf, welche in die Formenhohlräume eingeführt und entsprechend umspritzt werden. Mittels einer separaten Abzieheinrichtung können die Fertigspritzteile von dem jeweiligen Formkern abgestreift werden. - Der Nachteil bei diesen bekannten Abzieheinrichtungen liegt darin, daß die Spritzteile beschädigt werden können. Außerdem ist es schwierig, eine genaue Position einer separaten Abzieheinrichtung zu erreichen.

Davon ausgehend liegt der Erfindung die **Aufgabe** zugrunde, ein Werkzeug zum Mehrkomponenten-Spritzgießen, insbesondere zum 2-Komponenten-Spritzgießen von Kunststoff-Spritzteilen der eingangs angegebenen Art zu schaffen, mittels der keine Beschädigungen an dem abzustreifenden Spritzteil entstehen.

Die technische **Lösung** ist gekennzeichnet durch die Merkmale im Kennzeichen des Anspruchs 1.

Der besondere Vorteil des erfindungsgemäßen Werkzeugs besteht darin, daß die abzuziehenden, fertig gespritzten Spritzteile nicht beschädigt werden. Die Grundidee des erfindungsgemäßen Werkzeugs besteht darin, nicht - wie bisher - als Abzieheinrichtung eine separate Einrichtung zu verwenden, sondern die mit der Umsetzeinrichtung ausgestattete Werkzeughälfte mit einem querverschiebbaren Werkzeugeinsatz zu versehen, in welchem der Formenhohlraum für die letzte zu spritzende Komponente ausgebildet ist und dabei diesen Werkzeugeinsatz mit ihrem Formenhohlraum gleichzeitig als Abzieheinrichtung zu verwenden. Somit wird das fertig gespritzte Spritzteil von ihrer Kavität gehalten und abgestreift. Der Werkzeugeinsatz wird dabei so weit verfahren, daß das Spritzteil vom zugeordneten Formkem frei wird.

Die Weiterbildung gemäß Anspruch 2 schafft eine technisch einfache Möglichkeit, um den Werkzeugeinsatz zu verschieben. Der Kolben der Zylinder/Kolben-Einheit greift dabei an dem Werkzeugeinsatz an.

Um nach dem Abziehen des Spritzteils dieses aus dem Formenhohlraum des Werkzeugeinsatzes zu entfemen, wird eine Auswerfereinrichtung benötigt. Gemäß der Weiterbildung in Anspruch 3 ist diese an dem Werkzeugeinsatz angeordnet und mit diesem verfahrbar. Dadurch ist eine sichere Funktion der Auswerfereinrichtung gewährleistet, weil die Auswerfereinrichtung Teil des Werkzeugeinsatzes ist.

Um eine stabile Verbindung zwischen der Auswerfereinrichtung und dem Werkzeugeinsatz zu schaffen, sind diese gemäß Anspruch 4 über eine Führungssäule miteinander verbunden.

Die Weiterbildung gemäß Anspruch 5 schließlich hat den Vorteil, daß dadurch eine einfache Möglichkeit zum Betätigen der Auswerfereinrichtung geschaffen ist. Die Grundidee besteht darin, die eigentliche Auswerfereinrichtung zwar - zusammen mit dem Werkzeugeinsatz - beweglich innerhalb der Werkzeughälfte anzuordnen, jedoch die eigentliche Betätigungseinrichtung für die Auswerfereinrichtung, nämlich die Zylinder/Kolben-Einheit fest in der Werkzeughälfte anzuordnen. Die Zylinder/Kolben-Einheit ist dabei über eine bewegliche Verbindung mit der Auswerfereinrichtung, insbesondere mit einer Auswerferplatte verbunden. Sobald sich somit der Werkzeugeinsatz in der Auswerferposition befindet, ist die Auswerfereinrichtung mit der Zylinder/Kolben-Einheit gekoppelt und kann für den Auswerfevorgang betätigt werden.

Ein Ausführungsbeispiel eines erfindungsgemäßen Werkzeugs zum 2-Komponenten-Spritzgießen von Kunststoff-Spritzteilen wird nachfolgend anhand der Zeichnungen beschrieben. In diesen zeigt:
- Fig. 1a: einen Längsschnitt durch das geschlossene Werkzeug;
- Fig. 1b: eine Ansicht auf die - in Fig. 1a - linke Werkzeughälfte;
- Fig. 2 bis 6: verschiedene Verfahrensschritte im Funktionsablauf des Werkzeugs.

Das Werkzeug zum 2-Komponenten-Spritzgießen von Kunststoff-Spritzteilen 1 weist zwei Werkzeughälften 2, 2' auf, welche voneinander weg und aufeinander zu bewegbar sind. Dabei ist die - rechte - Werkzeughälfte 2 fest und die - linke - Werkzeughälfte 2' längsverschiebbar angeordnet. Diese Werkzeughälften 2, 2' definieren zwischen sich Formenhohlräume 3, 3' zum Spritzen zunächst einer ersten Komponente (Vorspritzteil 4) und anschließend zum Spritzen einer zweiten Komponente (Spritzteil 1).

In der beweglichen Werkzeughälfte 2' befindet sich ein Formeinsatz 5 für die erste Komponente sowie ein Formeinsatz 5' für die zweite Komponente. Während der Formeinsatz 5 fest in der Werkzeughälfte 2' angeordnet ist, ist der Formeinsatz 5' in einem Werkzeugeinsatz 6 angeordnet. Dieser ist quer zur Längsachse des Werkzeugs mittels einer Zylinder/Kolben-Einheit 7 verschiebbar. Über eine Führungssäule 8 ist der Werkzeugeinsatz 6 mit einer Auswerfereinrichtung 9 verbunden. Dieser zugeordnet ist eine weitere Zylinder/Kolben-Einheit 10, welche fest in der Werkzeughälfte 2' im Bereich der Rückseite angeordnet ist.

Schließlich befindet sich in der beweglichen Werkzeughälfte 2' eine linear verschiebbare sowie drehbare Umsetzeinrichtung 11. Sie ist am vorderen Ende einer Welle 12 gelagert. Die Umsetzeinrichtung 11 besitzt bezüglich der Welle 12 radial abstehende Formkerne 13.

Die Funktionsweise ist wie folgt:

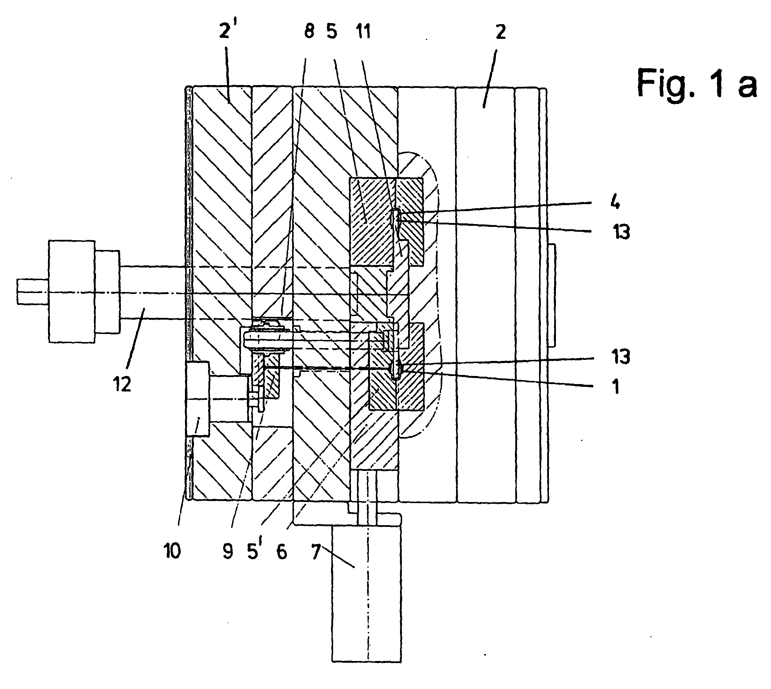

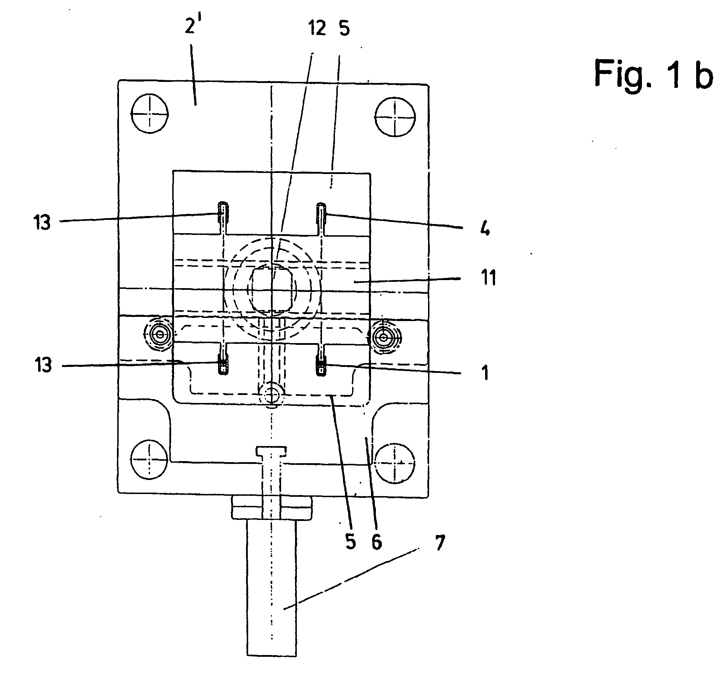

Fig. 1 zeigt das Werkzeug im geschlossenen Zustand. Oben wird die erste Komponente um den zugehörigen Formkern 13 herumgespritzt (Vorspritzteil 4), während unten die zweite Komponente gespritzt wird (fertiges Spritzteil 1).

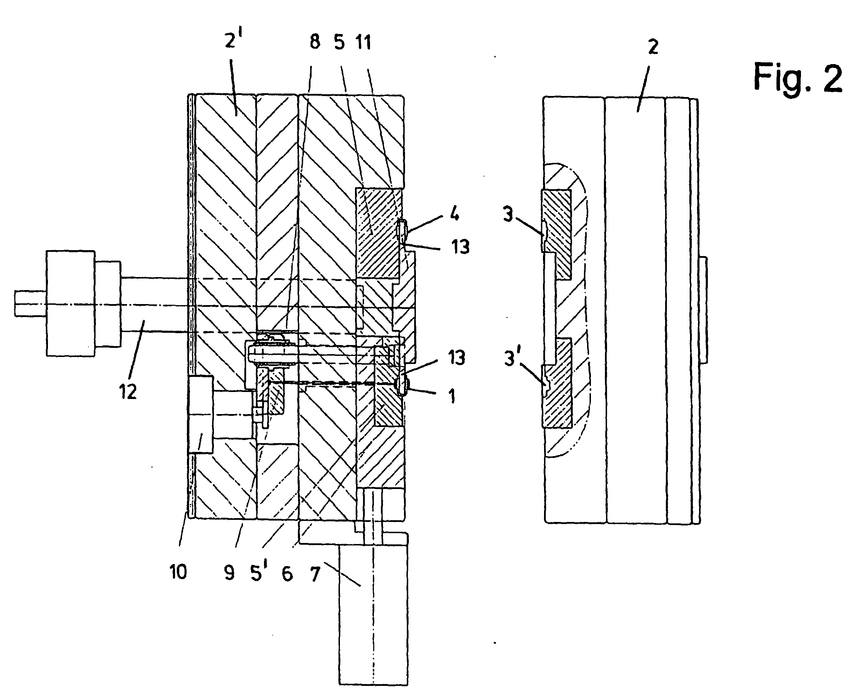

In Fig. 2 werden die beiden Werkzeughälften 2, 2' auf Öffnungsweite auseinandergefahren, d.h. das Werkzeug ist offen.

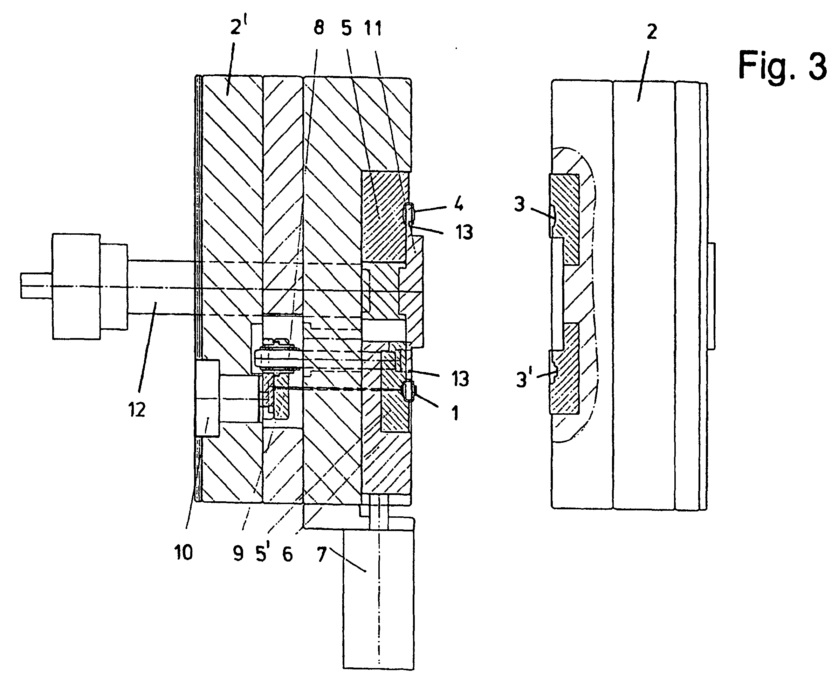

In Fig. 3 wird der Werkzeugeinsatz 6 mittels der Zylinder/Kolben-Einheit 7 nach unten verfähren. Das Spritzteil 1 bleibt dabei in dem Formenhohlraum 3' gehalten und wird dabei durch die Bewegung des Werkzeugeinsatzes 6 vom Formkern 13 abgezogen, ohne daß Beschädigungen am Spritzteil 1 auftreten.

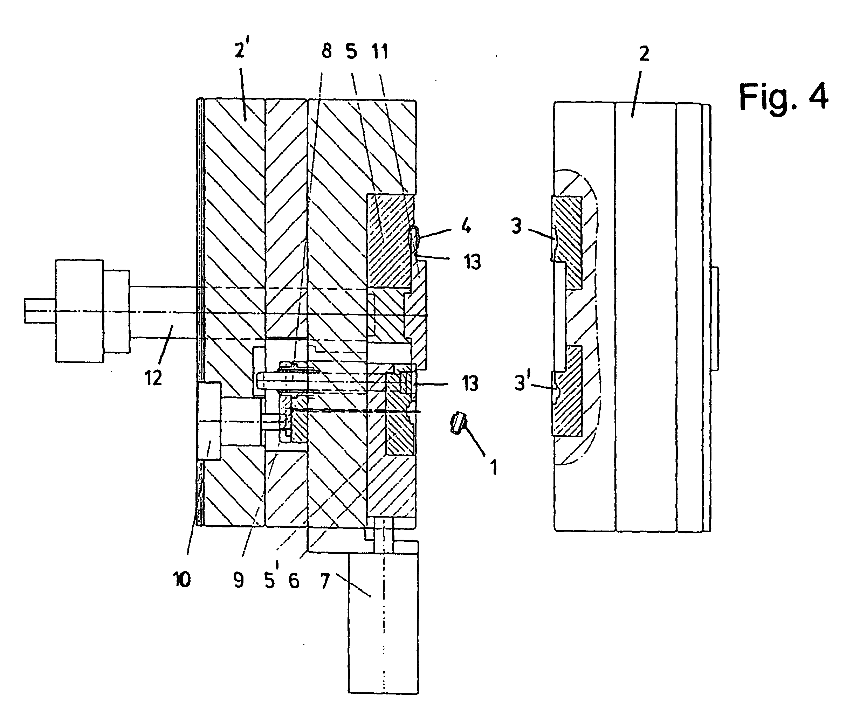

In Fig. 4 ist dargestellt, wie das fertige Spritzteil 1 ausgeworfen wird. Dabei ist die Zylinder/Kolben-Einheit über eine bewegliche Verbindung mit der Auswerfereinrichtung 9, nämlich der Auswerferplatte verbunden. Dadurch können die Auswerfer vor und zurück bewegt werden.

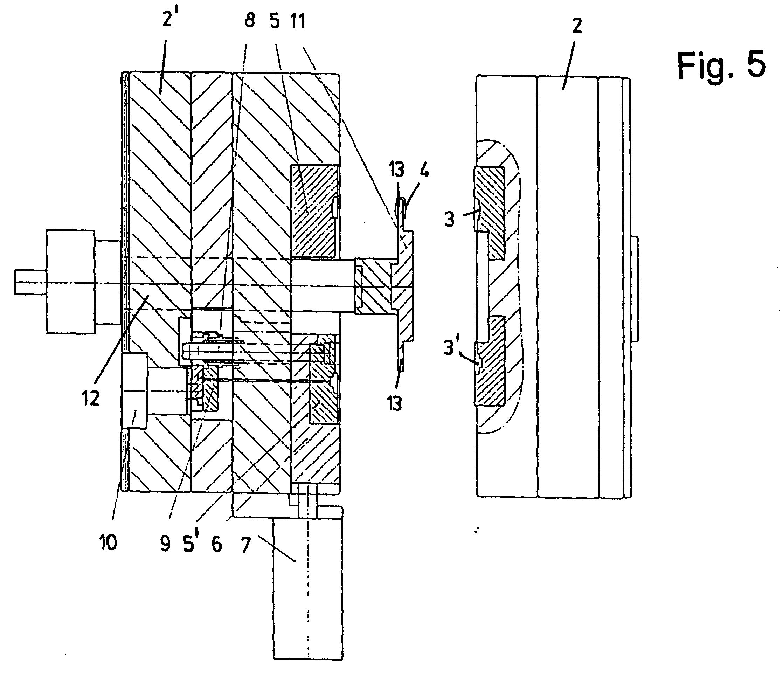

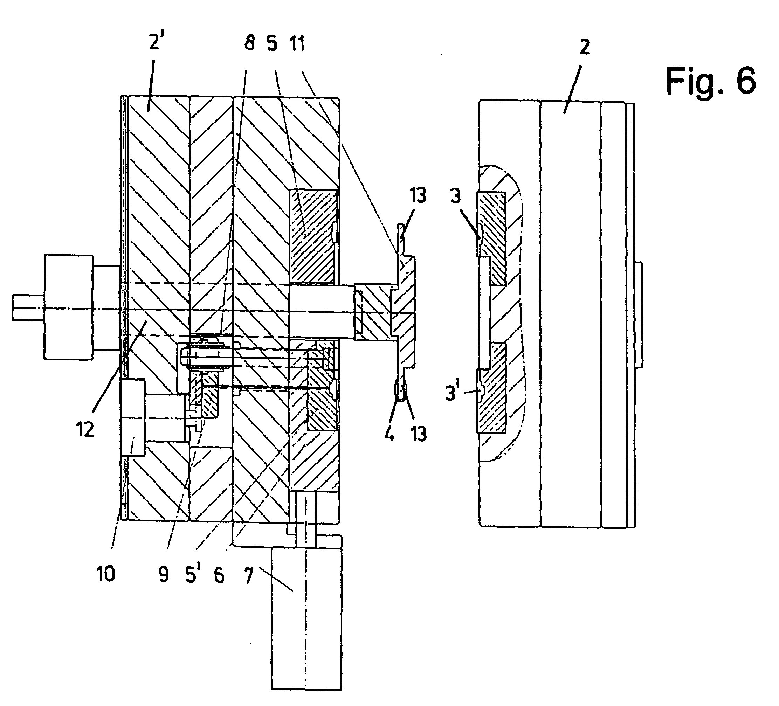

In Fig. 5 fährt die Umsetzeinrichtung vor. Sie wird anschließend um 180° gedreht und dadurch das Vorspritzteil nach unten umgesetzt. Gleichzeitig wird der Werkzeugeinsatz 6 wieder nach oben verfahren. (Fig. 6). Die Umsetzeinrichtung 11 fährt wieder zurück, und das Werkzeug wird geschlossen, so daß ein neuer Zyklus beginnt.

### Bezugszeichenliste

- 1: Spritzteil
- 2, 2': Werkzeughälften
- 3, 3': Formenhohlräume
- 4: Vorspritzteil
- 5, 5,: Formeneinsätze
- 6: Werkzeugeinsatz
- 7: Zylinder/Kolben-Einheit
- 8: Führungssäule
- 9: Auswerfereinrichtung
- 10: Zylinder/Kolben-Einheit
- 11: Umsetzeinrichtung
- 12: Welle
- 13: Formkern

## Patentansprüche

1. Werkzeug zum Mehrkomponenten-Spritzgießen, insbesondere zum 2-Komponenten-Spritzgießen von Kunststoff-Spritzteilen (1)
mit zwei Werkzeughälften (2, 2'), zwischen welchen die Formenhohlräume (3, 3') ausgebildet sind und welche auseinanderfahrbar sowie schließbar sind,
mit einer in der einen Werkzeughälfte (2') integrierten sowie in dieser ausfahrbaren, drehbaren sowie wieder versenkbaren Umsetzeinrichtung (11) mit wenigstens einem quer zur Verfahrrichtung der Umsetzeinrichtung (11) sich erstreckenden Formkern (13), mittels welcher die Vorspritzteile (4) zum Spritzen einer weiteren Komponente in die zugehörigen Formenhohlräume (3') umsetzbar sind, sowie
mit einer Auswerfereinrichtung (9) für die fertig gespritzten Spritzteile (1) von ihren Formkernen (13),
**dadurch gekennzeichnet,**
**daß** die Werkzeughälfte (2') mit der Umsetzeinrichtung (11) einen Werkzeugeinsatz (6) aufweist,
in welchem der Formenhohlraum (3') für die letzte zu spritzende Komponente ausgebildet ist und welcher in Abziehrichtung des fertig gespritzten Spritzteils (1) vom Formkern (13) verfahrbar ist und dabei das Spritzteil (1) im Formenhohlraum (3') des Werkzeugeinsatzes (6) gehalten ist.

2. Werkzeug nach dem vorhergehenden Anspruch,
**dadurch gekennzeichnet,**
**daß** außen an der Werkzeughälfte (2') mit der Umsetzeinrichtung (11) eine Zylinder/Kolben-Einheit (7) zum Verfahren des Werkzeugeinsatzes (6) angeordnet ist.

3. Werkzeug nach einem der vorhergehenden Ansprüche,
**dadurch gekennzeichnet,**
**daß** an dem Werkzeugeinsatz (6) die Auswerfereinrichtung (9) angeordnet und mit verfahrbar ist.

4. Werkzeug nach Anspruch 3,
**dadurch gekennzeichnet,**
**daß** die Auswerfereinrichtung (9) über eine Führungssäule (8) mit dem Werkzeugeinsatz (6) verbunden ist.

5. Werkzeug nach Anspruch 3 oder 4,
**dadurch gekennzeichnet,**
**daß** eine Zylinder/Kolben-Einheit (10) zum Betätigen der Auswerfereinrichtung (9) stationär in der Werkzeughälfte (2') mit der Umsetzeinrichtung (11) angeordnet und in der Auswerfeposition mit der Auswerfereinrichtung (9) koppelbar ist.

## Claims

1. Tool for multicomponent injection moulding, in particular for 2-component injection moulding of plastic mouldings (1), with two tool halves (2, 2') between which are formed the mould cavities (3, 3') and which can be moved apart and closed, with a transfer device (11) which is integrated into one tool half (2') and can be extended into this, rotated and lowered again, and which has at least one mould core (13) extending transverse to the movement direction of the transfer device (11), by means of which transfer device the pre-mouldings (4) can be transferred to the associated mould cavities (3') for moulding of a further component, and with an ejector device (9) for ejecting the finished mouldings (1) from their mould cores (13), **characterised in that** the tool half (2') with the transfer device (11) has a tool insert (6) in which is formed the mould cavity (3') for the last components to be moulded, and which can be moved from the mould core (13) in the extraction direction of the finished moulding (1), the moulding (1) being held in the mould cavity (3') of the tool insert (6).

2. Tool according to the preceding claim, **characterised in that** on the outside of the tool half (2') with the transfer device (11) is arranged a cylinder/piston unit (7) for moving the tool insert (6).

3. Tool according to one of the preceding claims, **characterised in that** the ejector device (9) is arranged on the tool insert (6) and can move with this.

4. Tool according to claim 3, **characterised in that** the ejector device (9) is connected to the tool insert (6) by way of a guide pillar (8).

5. Tool according to claim 3 or 4, **characterised in that** a cylinder/piston unit (10) for activating the ejector device (9) is arranged stationary in the tool half (2') with the transfer device (11) and in the ejection position can be coupled to the ejector device (9).

## Revendications

1. Outil pour effectuer un moulage par injection à plusieurs composants, en particulier pour effectuer un moulage par injection à deux composants de pièces en matière plastique moulées par injection (1), avec deux moitiés d'outil (2, 2'), entre lesquelles sont formées les cavités du moule (3, 3'), et lesquelles sont mobiles séparément tout comme refermables, avec un dispositif de déplacement (11) intégré dans une moitié d'outil (2') et amovible, rotatif et à nouveau escamotable dans celle-ci avec au moins un noyau de moule (13) s'étendant transversalement par rapport au sens d'avancement du dispositif de déplacement (11), au moyen duquel les pièces déjà moulées par injection (4) pour l'injection d'un autre composant peuvent être déplacées dans les cavités de moule (3') associées, de même qu'avec un dispositif d'éjection (9) des pièces moulées par injection (1) entièrement injectées de leurs noyaux de moule (13), **caractérisé en ce que** la moitié d'outil (2') comprend avec le dispositif de déplacement (11) un insert d'outil (6), dans lequel est formée la cavité du moule (3') pour le dernier composant à injecter et lequel est mobile dans le sens de retrait de la pièce moulée par injection (1) entièrement injectée du noyau de moule (13), et la pièce moulée par injection (1) est ainsi maintenue dans la cavité du moule (3') de l'insert d'outil (6).

2. Outil selon la revendication précédente, **caractérisé en ce qu'**une unité de cylindre et piston (7) est disposée à l'extérieur sur la moitié d'outil (2') avec le dispositif de déplacement (11) pour le déplacement de l'insert d'outil (6).

3. Outil selon l'une quelconque des revendications précédentes, **caractérisé en ce que** le dispositif d'éjection (9) est disposé sur la moitié d'outil (6) et mobile avec celle-ci.

4. Outil selon la revendication 3, **caractérisé en ce que** le dispositif d'éjection (9) est relié à l'insert d'outil (6) par une colonne de guidage (8).

5. Outil selon la revendication 3 ou 4, **caractérisé en ce qu'**une unité de cylindre et piston (10) est disposée de façon stationnaire dans la moitié d'outil (2') avec le dispositif de déplacement (11) pour actionner le dispositif d'éjection (9) et peut être couplé avec le dispositif d'éjection (9) dans la position d'éjection.
